# EUROPÄISCHE PATENTANMELDUNG

(11) **EP 1 312 884 A2**
(43) Veröffentlichungstag der Anmeldung: **21.05.2003**
(21) Anmeldenummer: 02023263.3
(22) Anmeldetag: 17.10.2002
(51) Int. Cl.: F27D 3/15, F27B 3/08

(54) **Elektrolichtbogenofen**

(30) Priorität: 16.11.2001 DE 10156355
(71) Anmelder: SMS Demag AG, 40237 Düsseldorf (DE)
(72) Erfinder: Figge, Dieter, 45147 Essen (DE)
(74) Vertreter: Valentin, Ekkehard

(57) **Zusammenfassung**

Die Erfindung betrifft ein metallurgisches Gefäß, insbesondere einen nicht kippbaren Elektrolichtbogenofen zum Schmelzen von Stahl, mit einem vorzugsweise zentralen Abstichkanal (5), der von Schieberplatten (8, 8') mit und ohne Öffnung beherrscht ist, die zwischen einer oberen und einer unteren Führungsplatte (9, 10) eines Plattenschiebers (7) geführt sind. Die Handhabung des Abstichs wird dadurch vereinfacht, dass die in intensivem Kontakt zur Stahlschmelze (57) stehenden Schieberplatten (8, 8') mit Hilfe einer Schnellwechselvorrichtung (11) maschinell auswechselbar sind.

## Beschreibung

Die Erfindung betrifft ein metallurgisches Gefäß, insbesondere einen nicht kippbaren Elektrolichtbogenofen zum Schmelzen von Stahl, mit einem vorzugsweise zentralen Abstichkanal, der von Schieberplatten mit und ohne Öffnung beherrscht ist, die zwischen einer oberen und unteren Führungsplatte geführt sind, wobei die Stahlschmelze beim Abstich in eine Gießpfanne fließt.

Elektrolichtbogenöfen sind vielfach mit einem Erkeranbau ausgestattet, in dem sich ein Abstichkanal mit einer Abstichöffnung befindet. Das Abstechen der Metallschmelze (flüssiger Stahl) kann nur durch Kippen des Gefäßes in Richtung des Erkeranbaus erfolgen, wobei der Abstichkanal durch Verschieben einer Schieberplatte geöffnet wird. Auf der Schieberplatte befindet sich Sand als Füllmasse, der verhindert, dass die Metallschmelze an der Schieberplatte anbackt. Der Sand wird von oben in den Abstichkanal eingefüllt, so lange der Ofen noch nicht gekippt ist.

Anstelle dieser konventionellen Lösung wird in der DE 198 26 085 A1 zur Erzielung eines schlackenfreien Abstichs ein Stopfen für die Abstichöffnung mit einer Stopfenhülle versehen, in der sich hitzebeständiger, fließfähiger Stoff befindet. Nach dem Einsatz wird die Abstichöffnung von der Außenseite des Gefäßes durch den Stopfen verschlossen. Das Material der Stopfenhülle ändert seine Konsistenz und/oder seine Form, so dass sich der fließfähige Stoff in der Abstichöffnung abdichtend ausbreitet. Diese Lösung ist zwar von hoher Qualität, konnte sich jedoch in der Praxis nicht durchsetzen.

Ein anderes Verfahren zum Verschließen des Bodenabstichs eines metallurgischen Gefäßes wird in der EP 0 624 769 A1 offenbart. Es besteht in dem Einbringen eines mit einem Bindemittel vermischten, fließfähigen Materials in die Bodenabstichöffnung. Der Verbrennungsrückstand des Bindemittels und das fließfähige Material verstopfen die Abstichöffnung und schützen eine übliche Schieberplatte vor einer Berührung mit der Schmelze.

Aus der DE 32 30 646 C1 sind ferner ein Verfahren und eine Vorrichtung zum Verschließen der Abstichöffnung eines feststehenden, nicht kippbaren Elektrolichtbogenofens bekannt, bei der eine vorher unter Druck von außen eingebrachte Stopfmasse eines schüttfähigen, feuerfesten Materials zum Verdrängen der Schmelze nach oben führt und so eine übliche Schieberplatte vor einer Berührung mit der Schmelze bewahrt. Dadurch wird ein Anbacken der Schmelze an der Schieberplatte verhindert und ein Verschleiß derselben vermindert.

Nachteilig ist aber bei Verwendung von Schutzmassen für die Schieberplatten die Verunreinigung der Schmelze durch die Schutzmassen und der große Bedienungsaufwand beim Abstich.

In der EP 0 942 796 B1 wird ein Verfahren und eine Vorrichtung zum diskontinuierlichen Abstechen von Schmelzen offenbart. Hierbei wird der Abstich durch Schließen eines Plattenschiebers unterbrochen. Danach kühlt sich die Stahlschmelze im Abstichkanal oberhalb des Plattenschiebers ab und erstarrt zu einem Gusspfropfen. Dieser schützt den Plattenschieber vor der Schmelzhitze. Bei erneutem Abstich wird der Gusspfropfen durch induktive Beheizung des Abstichkanals wieder verflüssigt und der Plattenschieber geöffnet. Diese Lösung ist wegen der elektrischen Ausrüstung teuer und kompliziert sowie zum Einsatz unter einem Elektrolichtbogenofen (z. B. zum Wechsel des Abstichkanals) kaum geeignet.

Das Hauptproblem bei ungeschützten Schieberplatten metallurgischer Öfen aller Art, ist die mangelnde Standzeit der Schieberplatten, die bei Stahlschmelzen aus Keramik bestehen. Für den Fall, dass die Schieberplatte unmittelbar mit der Schmelze (z. B. Flüssigstahl) in Kontakt kommt, bilden sich Risse und die Schieberplatte verformt sich, wodurch ihre Dichtfunktion gefährdet ist.

Ein weiteres Problem besteht darin, das Anbacken von Stahlschmelze an den kalten Schieberplatten zu vermeiden. Schieberplatten mit angebackenem Stahl lassen sich nicht mehr verschieben und sind blockiert.

Der Erfindung liegt die Aufgabe zugrunde, bei einem gattungsgemäßen Elektrolichtbogenofen die Handhabung des Abstichs zu vereinfachen und die geschilderten Probleme zu vermeiden.

Die Aufgabe wird gelöst durch die Merkmale des Patentanspruchs 1. Da es sich bei den Schieberplatten um Keramikmaterial handelt, gegebenenfalls mit eingearbeiteter Grafit- oder Bomitridschicht auf der Schmelzeseite, besteht keine Gefahr des Anbackens der Schmelze an diesen Platten. Dadurch wird auch die Gefahr des Verstopfens des Abstichkanals verringert. Die Führungsplatten sind ebenfalls aus Keramik. Trotzdem ist die thermische Beanspruchung hoch.

Der durch das längere Einwirken der Schmelze auf die Schieberplatten bedingte Verschleiß derselben, wird durch deren schnelles und maschinelles Auswechseln kompensiert.

Für die Fertigung der Platten ist es vorteilhaft, dass eine erste und zweite Schieberplatte vorgesehen sind, wobei die zweite Schieberplatte die Öffnung aufweist, deren Durchmesser zumindest dem des Abstichkanals im Bereich der Schieberplatten entspricht. Die beiden Schieberplatten können auch aus unterschiedlicher Keramik gefertigt sein.

Eine vorteilhafte Weiterentwicklung der Erfindung besteht darin, dass dem Plattenschieber eine Einführung für die Schieberplatten und dieser ein erstes Plattenmagazin, vorzugsweise ein erstes Rundmagazin mit unverschlissenen Schieberplatten vorgeschaltet sind und dass dem Plattenschieber eine Ausführung für die Schieberplatten und dieser ein zweites Plattenmagazin, vorzugsweise ein zweites Rundmagazin für verschlissene Schieberplatten nachgeschaltet sind. Das erste Rundmagazin ist ein Speicher für neue bzw. unverschlissene Schieberplatten. Diese gelangen über die Einführung zwischen die Führungsplatten in den Bereich des Abstichkanals. Von dort gelangen die mehr oder weniger verschlissenen Schieberplatten über die Ausführung in das zweite Rundmagazin, das einen Speicher für die verschlissenen Schieberplatten darstellt. Die verschlissenen Schieberplatten können nach Neubeschichtung mit Bomitrid weiter verwendet werden. Die beiden Rundmagazine, die Ein- und Ausführung und die beiden Führungsplatten sind Teil der Schnellwechselvorrichtung.

Anstelle der Rundspeicher sind auch lineare Stapelmagazine denkbar, die platzsparend und besonders einfach nachladbar sind und hohe Speicherkapazität ermöglichen.

Es ist von Vorteil, dass die Rundmagazine eine horizontale Achse und vorzugsweise 24 parallel zu dieser und tangential zum Umfang der Rundmagazine angeordnete Speicherplätze für die Schieberplatten aufweisen. Die relativ große Zahl der Speicherplätze ermöglicht eine entsprechend lange Betriebszeit der Schnellwechselvorrichtung, bis ein Wechsel bzw. Nachfüllen und Leeren der Magazine erforderlich ist.

Voraussetzung für einen störungsfreien Transport der Schieberplatten ist, dass diese, die sich zwischen den Führungsplatten und in der Ein- und Ausführung sowie in den Rundmagazinen befinden, fluchtend angeordnet sind.

Eine vorteilhafte Ausbildung der Erfindung besteht darin, dass auf den Abstichkanal fernen Seiten der Rundmagazine Linearantriebe vorgesehen sind, die mit den Schieberplatten fluchten und zum Axialspiel freien Verschieben der Schieberplatten zwischen den Rundmagazinen dienen. Auf diese Weise können die Schieberplatten problemlos durch die Schnellwechselvorrichtung geschoben werden.

Für eine möglichst weitgehende Abdichtung des Abstichkanals ist es wichtig, dass die Schieberplatten beim Passieren desselben Axialspiel frei aneinander liegen. Dies wird dadurch erreicht, dass die Druckkräfte der Linearantriebe entgegen gerichtet sind und dass die Druckkraft des in Transportrichtung wirkenden Linearantriebs größer als die des gegenüber liegenden ist. Auf diese Weise stehen die Schieberplatten beim Axialtransport immer unter Axialdruck, der die Fugendichtheit garantiert. Die Linearantriebe können elektrisch, hydraulisch oder pneumatisch ausgebildet sein.

Für einen störungsfreien Betrieb der Schnellwechselvorrichtung ist es wichtig, dass vorzugsweise jedes der Rundmagazine einen Drehantrieb aufweist, und dass die Drehantriebe synchron laufen. Es ist aber auch denkbar, dass ein gemeinsamer Antrieb mit Drehverbindung zwischen beiden Rundmagazinen vorgesehen ist.

Vorteilhaft ist auch, das der Abstichkanal auf ganzer Länge in Fließrichtung der Schmelze konisch erweitert ist. Dadurch ist die Gefahr einer Verstopfung des Abstichkanals durch angebackene Schmelzenreste vermindert und ein Lösen eines eventuell vorhandenen Gusspfropfens vereinfacht. Das Anbacken an der Abstichkanalwand wird dadurch erschwert, dass ein Oberteil des Abstichkanals, das sich oberhalb der Schieberplatten befindet, aus Keramik besteht, die einen erneuerbaren Bornitridbelag aufweist.

Wenn der Plattenschieber öffnet, wird normalerweise die Stahlsäule im Gefäß den Pfropfen nach unten drücken. Sollte das nicht gelingen, wird eine wirkungsvolle Maßnahme zum Lösen und Beseitigen einer Verstopfung im Abstichkanal vorgeschlagen; sie besteht darin, dass in der Achsrichtung des Abstichkanals eine Stoßstange angeordnet ist, die von ihrer Parkposition in der Gefäßabdeckung des Elektrolichtbogenofens aus in den Abstichkanal bewegbar ist. Ein leichter Stoß dieses Stößels bewirkt, dass der Stahlpfropfen nach unten fällt und der Abstichkanal frei ist. Voraussetzung dafür ist, dass der Plattenschieber vorher geöffnet werden konnte.

Ein für die Lebensdauer der Schieberplatten wichtiges Merkmal besteht darin, dass diese aus einem Keramikwerkstoff hoher Wärmeleitfähigkeit, vorzugsweise Aluminiumnitrid oder Siliciumcarbid bestehen. Die hohe Wärmeleitfähigkeit führt zur Vergleichmäßigung der Temperatur der Schieberplatten und verringert so deren Verzug. Dadurch werden Risse vermieden und die Dichtfähigkeit derselben erhalten. Dadurch, dass die Schieberplatten einen Bornitridbelag aufweisen, wird das Anbacken von Schmelzresten weitgehend verhindert.

Eine Verbesserung der Dichtfähigkeit der Schieberplatten wird dadurch erreicht, dass die Schieberplatten in kaltem Zustand eine nach unten durchhängende Längswölbung aufweisen. Bei richtiger Auslegung der Längswölbung sind die Schieberplatten im Warmzustand durch Ausdehnen der heißen Seite völlig eben. Dadurch kann deren Dichtspiel zwischen den Führungsplatten minimiert werden.

Zum Vermeiden einer Stahlanbackung auf den Schieberplatten wird vorgeschlagen, dass dieselben durch die Linearantriebe in Längsschwingungen versetzbar sind, die vorzugsweise eine Frequenz von 1 Hz und eine Amplitude von 1,5 bis 3 mm aufweisen. Auf diese Weise soll ein Festgehen der Schieberplatten unter dem erstarrten Stahlpfropfen verhindert werden.

Das hochbelastete Oberteil des Abstichkanals kann dadurch leichter ausgewechselt werden, dass ein schwenkbarer Plattenschieber um eine horizontale Achse nach unten wegklappbar ausgebildet ist.

Ein anderer Weg, die Lebensdauer der Bauelemente des Abstichkanals zu verlängern, besteht darin, dass ein Doppel-Plattenschieber verwendet wird. Dabei wird ein Zwischenstück eines alternativen Abstichkanals zwischen den Schieberplatten mit fließfähigem Füllmaterial, vorzugsweise Sand, gefüllt, der die zweite Schieberplatte vor einem Kontakt mit der Schmelze schützt. Wegen des raschen Einfüllens des Sands, kann die Schieberplatte nach kurzer Zeit den Abstichkanal freigeben und steht deshalb nur kurze Zeit in vollem Kontakt mit der Schmelze. Sie wird dadurch thermisch weniger beansprucht, während die zweite Schieberplatte durch den Sand geschützt ist.

Beim Herunterfallen des Gusspfropfens besteht die Gefahr, dass die Auskleidung der Gießpfanne beschädigt wird. Diese Gefahr wird dadurch gebannt, dass auf dem Boden der Gießpfanne ein verlorener Stahlblecheinsatz angeordnet ist, der den Gusspfropfen elastisch auffängt. Da der Stahlblecheinsatz vorzugsweise aus dem Material der Schmelze besteht, wird diese durch sein Einschmelzen nicht verunreinigt.

Weitere Merkmale der Erfindung ergeben sich aus der folgenden Beschreibung und den Zeichnungen, in denen Ausführungsbeispiele der Erfindung schematisch dargestellt sind.

Es zeigen:
- Fig. 1: einen Vertikalschnitt durch einen Abstichkanal eines Elektrolichtbogenofens mit einer Schnellwechselvorrichtung für Schieberplatten,
- Fig. 2: einen gegenüber Fig. 1 um 90° gedrehten Vertikalschnitt eines modifizierten anderen Abstichkanals,
- Fig. 3: eine vereinfachte Draufsicht auf die Schnellwechselvorrichtung von Fig. 1,
- Fig. 4: einen Vertikalschnitt durch eine in einer Führung gehaltene Schieberplatte in kaltem Zustand,
- Fig. 4a: die Schieberplatte von Fig. 4, jedoch in heißem Zustand,
- Fig. 5: einen Vertikalschnitt durch eine in einer anderen Führung gehaltene andere Schieberplatte in kaltem Zustand,
- Fig. 5a: die andere Schieberplatte von Fig. 5 jedoch in heißem Zustand,
- Fig. 6: einen Vertikalschnitt durch einen Elektrolichtbogenofen mit einer Stoßstange für den Abstichkanal und einen Stoßstangenantrieb,
- Fig. 7: einen Horizontalschnitt durch den Elektrolichtbogenofen von Fig. 6,
- Fig. 8: einen Vertikalschnitt durch einen Abstichkanal mit einem schwenkbaren Rahmen und einem darin eingebauten Plattenschieber,
- Fig. 9: der Rahmen von Fig. 8 in geschwenktem Zustand,
- Fig. 10: eine Draufsicht auf den schwenkbaren Rahmen von Fig. 8,
- Fig. 11: einen Längsschnitt durch einen alternativen Abstichkanal mit zwei im Abstand übereinander liegenden Plattenschiebem,
- Fig. 12: einen Vertikalschnitt durch eine Gießpfanne mit einem Aufprallschutz des Pfannenbodens,
- Fig. 12a: eine Draufsicht auf die Gießpfanne von Fig. 12 mit dem Aufprallschutz.

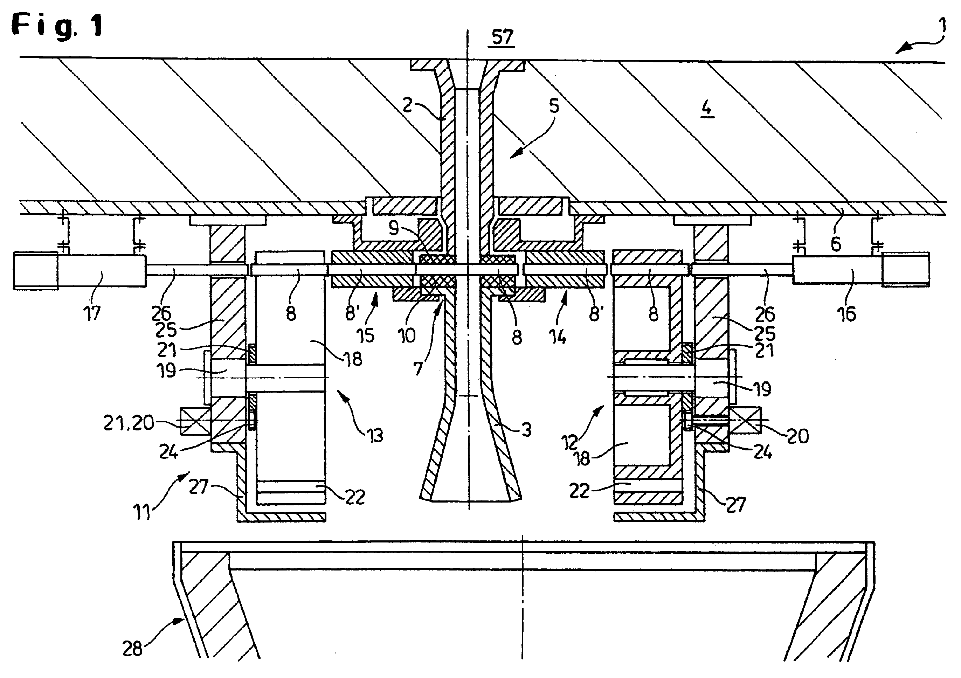

Figur 1 zeigt die Bodenpartie eines kippbaren Elektrolichtbogenofens 1 zum Schmelzen von Stahl, der eine Grundplatte 6 und eine diese bedeckende Auskleidung 4 aus feuerfestem, isolierendem Material aufweist. Dieses wird von einem Abstichkanal 5 durchdrungen, der aus einem Oberteil 2 und einem Unterteil 3 zusammengesetzt ist, die beide aus Keramik bestehen.

Zwischen Ober- und Unterteil 2, 3 befindet sich ein Plattenschieber 7, der zum öffnen und Schließen des Abstichkanals 5 und damit zum Steuern des Abstichs der Stahlschmelze 57 dient. Der Plattenschieber 7 weist linear verschiebbare Schieberplatten 8, 8' und eine feststehende obere und untere Führungsplatte 9, 10 auf, die zur Führung und Abdichtung der Schieberplatten 8, 8' dienen. Die Schieberplatten 8, 8' bestehen aus Keramik und die Führungsplatten 9, 10 aus warmfestem Edelstahl.

Die Schieberplatten 8, 8' sind der hohen Temperatur und dem Druck der Stahlschmelze 57 ausgesetzt. Dadurch unterliegen sie einem verhältnismäßig hohen Verschleiß und müssen deshalb relativ häufig ausgewechselt werden. Dazu dient eine Schnellwechselvorrichtung 11, die in Bewegungsrichtung der Schieberplatten 8, 8' gesehen vor und nach dem Plattenschieber 7 angeordnet ist. Zu der Schnellwechselvorrichtung 11 gehören ein erstes und zweites Rundmagazin 12, 13 sowie eine Einführung 14 und eine Ausführung 15 sowie ein erster und zweiter Linearantrieb 16, 17 für die Schieberplatten 8, 8'. Die Rundmagazine 12, 13 weisen eine Trommel 18 auf, die auf einem Lagerbolzen 19 gelagert und von einem Drehantrieb 20 über ein Getriebe 21 synchron angetrieben sind.

Der Lagerbolzen 19 und der Drehantrieb 20 mit einem Antriebsritzel 24 sind an einer Konsole 25 befestigt und diese an der Grundplatte 6. Die Trommeln 18 sind nach unten durch eine Abdeckung 27 gegen die Hitze einer mit Stahlschmelze gefüllten Gießpfanne 28 geschützt.

Am Umfang der Trommeln 18 sind 24 tangential angeordnete Speicherplätze 22 vorgesehen. In diesen befinden sich abwechselnd eine Schieberplatte 8 ohne Öffnung 23 und eine Schieberplatte 8' mit einer Öffnung 23. Die Schieberplatten 8 ohne Öffnung 23 dienen dem Verschließen, die Schieberplatten 8' mit der Öffnung 23 dem Öffnen des Abstichkanals 5. Der Durchmesser der Öffnungen 23 entspricht dem Durchmesser des Abstichkanals 5 im Bereich dieser Öffnungen.

Zwischen der ersten Trommel 18 und dem Plattenschieber 7 befindet sich die Einführung 14, zwischen demselben und der zweiten Trommel 18 die Ausführung 15. Ein- und Ausführung 14, 15 dienen der Führung der Schieberplatten 8, 8' von der ersten Trommel 18 zu dem Plattenschieber 7 und weiter zu der zweiten Trommel 18. Es sind auch mehrere, hintereinander geschaltete Ein- und Ausführungen 14, 15 denkbar.

Der Transport der Schieberplatten 8, 8' von der ersten zur zweiten Trommel 18 geschieht mittels der Linearantriebe 16, 17, deren Stößel 26 in einer Flucht mit den Schieberplatten 8, 8' der Trommeln 18 der Ein- und Ausführung 14, 15 sowie des Plattenschiebers 7 liegen. Der zweite Linearantrieb 17 baut eine Kraft auf, die dem ersten Linearantrieb 16 entgegengerichtet, jedoch kleiner als dessen Kraft ist. Auf diese Weise werden alle fluchtenden Schieberplatten 8, 8' beim Transport A-xialspalt frei verspannt. Dadurch bleibt der Abstichkanal 5 auch beim Passieren der Schieberplattenstöße dicht.

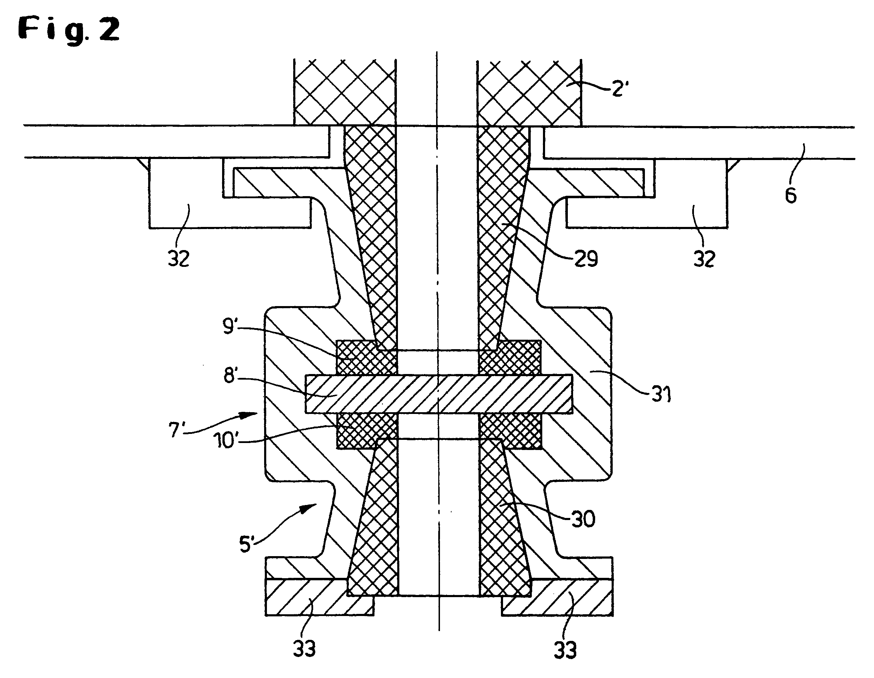

Die Figur 2 zeigt einen gegenüber Fig. 1 um 90° gedrehten Vertikalschnitt durch einen modifizierten Abstichkanal 5'. Dessen Gehäuse 31 ist oberhalb eines Plattenschiebers 7' mit einem oberen Keramikteil 29 und unterhalb desselben mit einem unteren Keramikteil 30 ausgekleidet. Das Gehäuse 31 ist über Klammem 32 mit der Grundplatte 6 verbunden. Dabei wird das außen konisch ausgebildete obere Keramikteil 29 gegen das innen entsprechend gestaltete Gehäuse 31 und gegen ein keramisches Oberteil 2' sowie gegen eine obere Führungsplatte 9' gespannt und abgedichtet. Entsprechend wird das untere Keramikteil 30 über Flanschstücke 33 gegen das Gehäuse 31 und gegen eine untere Führungsplatte 10' gespannt. Die Führungsplatten 9', 10' und die Schieberplatten 8, 8' gehören zum Plattenschieber 7'. Die Schnellwechselvorrichtung 11 ist nicht dargestellt, da sie sich vor und hinter der Zeichnungsebene befindet.

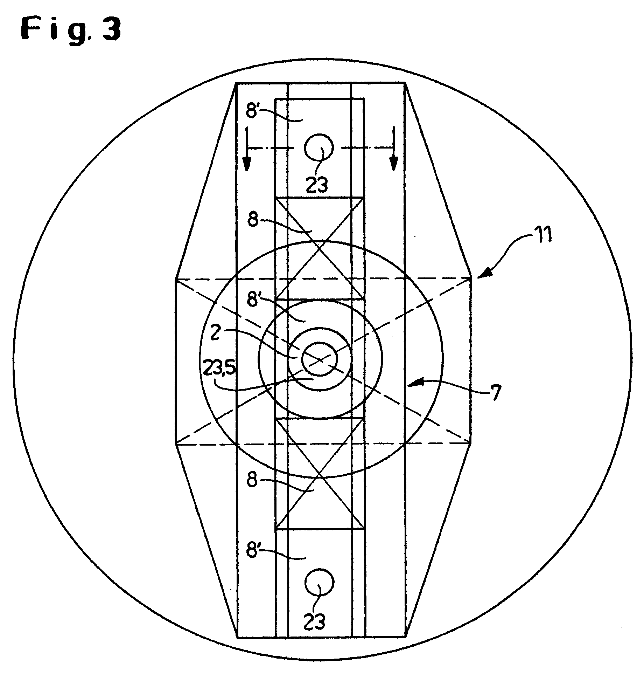

In Figur 3 ist ein vereinfachter Horizontalschnitt durch den Abstichkanal 5 mit seinem Oberteil 2 dargestellt. In der Abstichkanalposition befindet sich eine Schieberplatte 8' mit der Öffnung 23, wodurch der Abstichkanal 5 geöffnet ist. In den Wartepositionen vor und nach der Abstichkanalposition befinden sich Schieberplatten 8 ohne Öffnung 23, in den Trommelpositionen solche mit Öffnungen 23.

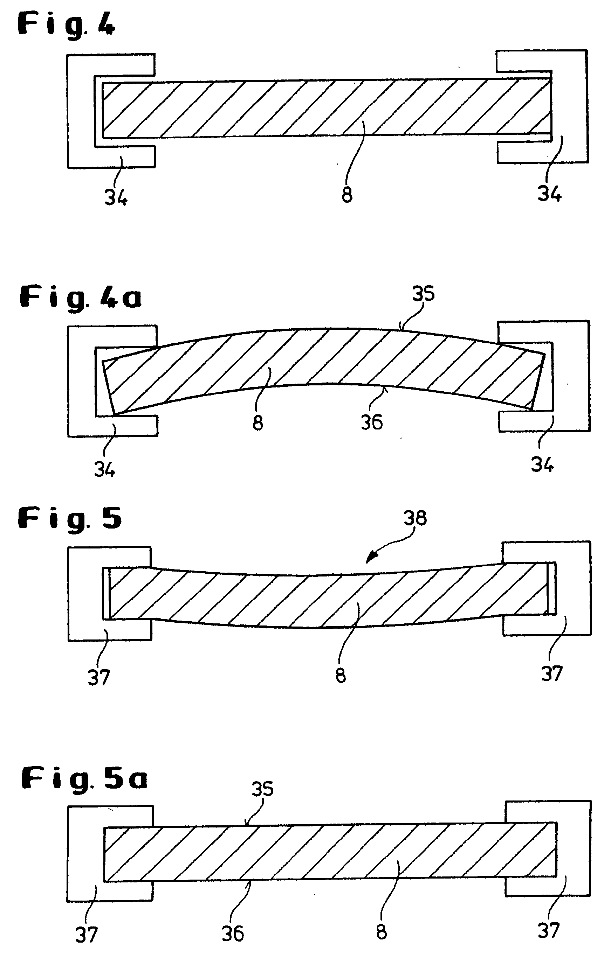

Die Figuren 4 und 4a zeigen eine Schieberplatte 8 mit zwei Führungen 34, 34', die mit großem Führungsspiel arbeiten. Dies ist erforderlich, um die Schieberplatte 8 noch bewegen zu können, selbst wenn diese sich im Betrieb verzieht. Dies ist der Fall, wenn sich dieselbe durch einseitige Aufheizung auf der Heißseite 35, bedingt durch den einseitigen Kontakt mit der Schmelze, einseitig ausdehnt und dadurch krümmt.

In den Figuren 5 und 5a ist eine Schieberplatte 8 mit Führungen 37 dargestellt, die nur geringes Spiel aufweisen. Aus Figur 5 geht hervor, dass die kalte Schieberplatte 8 eine Längswölbung 38 aufweist. Durch das Aufheizen der Schieberplatte 8 dehnt sich die Heißseite 35 stärker als die Kaltseite 36 aus, wodurch die Schieberplatte 8 eben wird und trotz des geringen Spiels in den Führungen 37 verschiebbar ist.

Eine andere Möglichkeit zum Verhindern des thermischen Verzugs, ist die Verwendung gut wärmeleitender Keramik, wie Aluminiumnitrid oder Siliciumcarbid. Dadurch findet ein weitgehender Temperaturausgleich statt, der ein Verziehen verhindert.

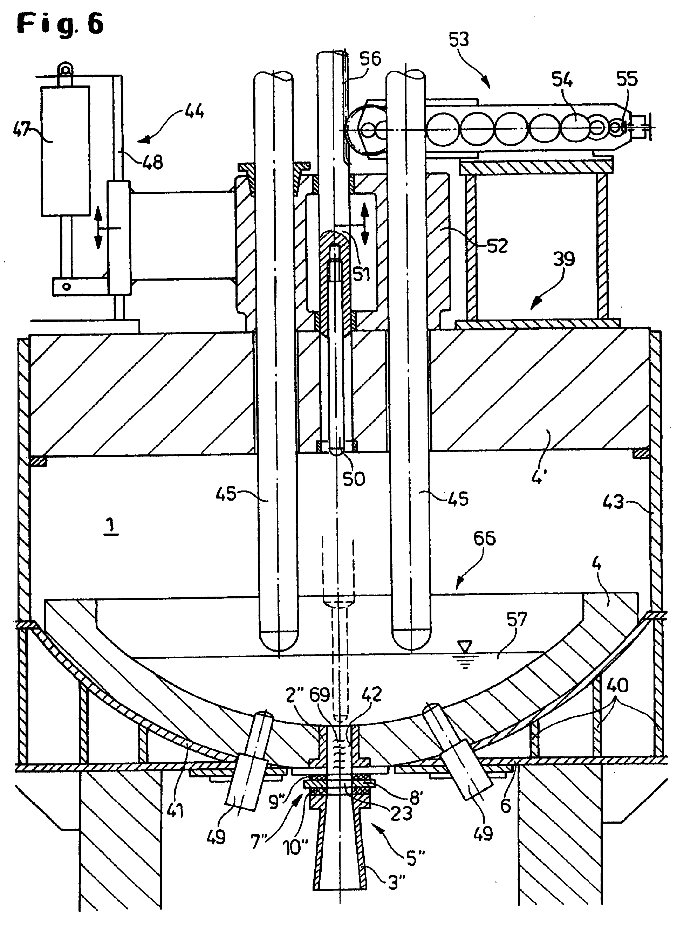

In Figur 6 ist ein Vertikalschnitt durch den gesamten Elektrolichtbogenofen 1 dargestellt, mit dem metallurgischen Gefäß 66 und einer Gefäßabdeckung 39. Zu dem metallurgischen Gefäß 66 gehören eine Stahlblechhülle 41 mit Stützen 40, die sich auf der Grundplatte 6 abstützen. Die Stahlblechhülle 41 ist mit einer hitzebeständigen isolierenden Auskleidung 4 versehen, an deren tiefster Stelle ein Abstichkanal 5" angeordnet ist. Dieser weist ein Oberteil 2" und ein Unterteil 3" auf, die in Fließrichtung der Stahlschmelze 57 konisch erweitert sind. Beide Teile 2", 3" bestehen aus Keramik, wobei zumindest das Oberteil 2" zusätzlich auf seiner Innenfläche einen Bonitridbelag 42 aufweist, der ein Anbacken der Schmelze erschwert. Zwischen dem Ober- und Unterteil 2", 3" befindet sich ein Plattenschieber 7" mit einer feststehenden oberen und unteren Führungsplatte 9", 10" und der zwischen beiden geführten Schieberplatte 8' mit der Öffnung 23.

Die Schnellwechselvorrichtung 11 ist in Figur 6 nicht dargestellt, da sie außerhalb der Zeichenebene angeordnet ist. Sie dient nicht nur dem schnellen Wechsel der Schieberplatten 8, 8' sondern auch der Erzeugung einer kontinuierlich oszillierenden Längsbewegung derselben. Diese Längsbewegung mit einer Amplitude von 1,5 bis 3 mm und einer Frequenz von 1Hz wird von den Linearantrieben 16, 17 erzeugt.

Die Gefäßabdeckung 39 weist eine andere, hitzebeständige und isolierende Verkleidung 4' auf, die sich über eine stählerne Abdecktrommel 43 auf den metallurgischen Gefäß 66 abstützt. Auf der Gefäßabdeckung 39 befindet sich eine Elektrodenverstellung 44 für die Elektroden 45 mit einem Elektrodenantrieb 47 und einer Elektrodenführung 48. Die Elektroden 45 ragen durch die andere Auskleidung 4' hindurch in das metallurgische Gefäß 66, wo sie gegenüber von Gegenelektroden 49 positioniert sind.

Die andere Auskleidung 4' wird zwischen den Elektroden 45 in der Achse des Abstichkanals 5" von einer Stoßstange 50 durchragt, die aus Keramik besteht und austauschbar ist. Sie weist eine Verlängerung 51 aus Stahl auf, die in einer Elektrodenhalterung 52 geführt ist. Die Verlängerung 51 besitzt eine Antriebszahnstange 56, die über diverse Stoßstangenantriebsräder 54 von einem Stoßstangenantriebsritzel 55 antreibbar ist. Dieser Stoßstangenantrieb 53 ist um ca. 60° in die Zeichnungsebene geschwenkt dargestellt. Die Verlängerung 51 ist ebenfalls rund und wird in drei Gleitlagem geführt, wobei das untere aus Keramik besteht und die zwei oberen aus Buntmetall. Verlängerung 51 und Stoßstange 50 sind durch Gewinde miteinander verbunden.

Die Stoßstange 50 befindet sich normalerweise in der anderen Auskleidung 4' zurückgezogen in Parkposition. Erst beim Öffnen des Plattenschiebers 7" wird sie durch die Stahlschmelze 57 hindurch in den weiteren Abstichkanal 5" bewegt und trifft dort den Gusspfropfen 69. Wegen der Geometrie des weiteren Abstichkanals 5" (konische sich nach unten erweitemde Form) genügt ein leichter Stoß, um den Gusspfropfen 69 zu lösen, so dass er nach unten fällt. Das Lösen des Gusspfropfens 69 wird auch durch den dünnen emeuerbaren Bornitridbelag 42 auf der Innenfläche des weiteren Oberteils 2" erleichtert, durch den das Festkleben des Gusspfropfens 69 vermieden wird.

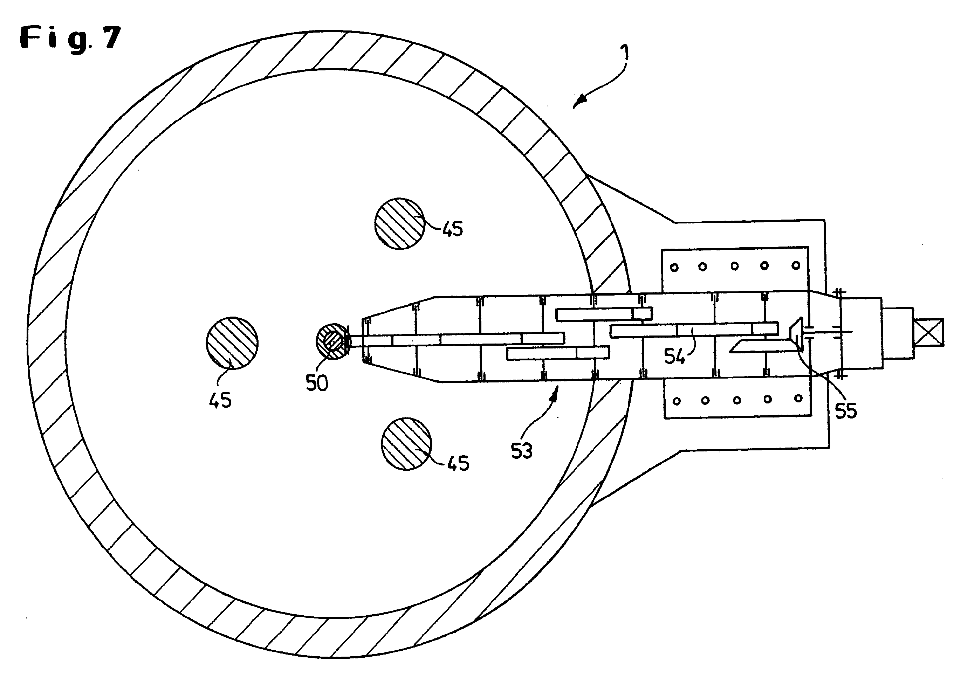

Figur 7 zeigt einen Horizontalschnitt durch den Elektrolichtbogenofen 1 und den Stoßstangenantrieb 53. Der Elektrolichtbogenofen 1 ist mit drei Elektroden 45 bestückt. In seiner Mitte ist die Verlängerung 51 mit der Antriebszahnstange 56 zu erkennen, ebenso das Stoßstangenantriebsritzel 55 und die zahlreichen Stoßstangenantriebsräder 54, die die Entfernung zur Antriebszahnstange 56 überbrücken und die erforderliche Übersetzung bewirken.

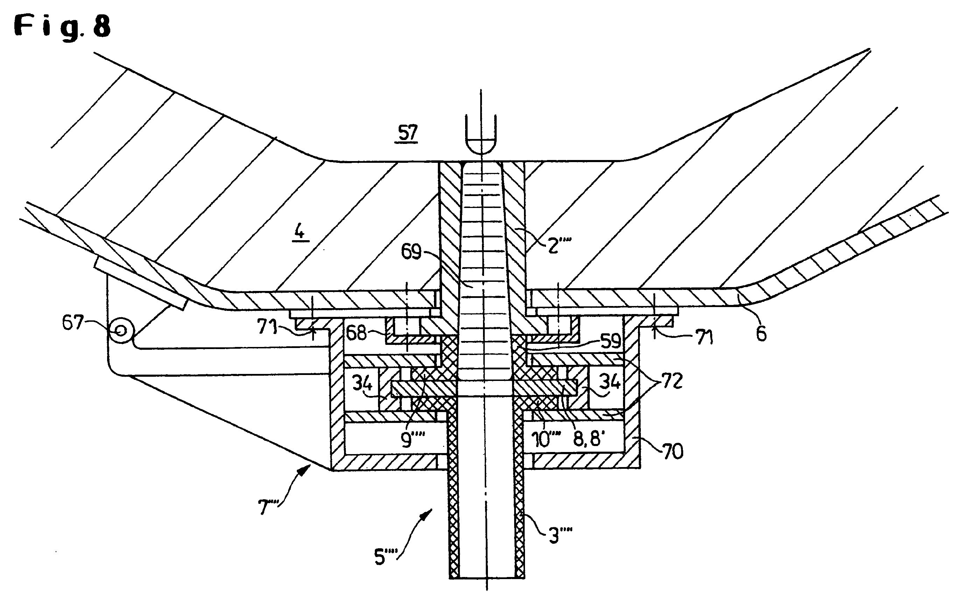

In Figur 8 ist ein Vertikalschnitt durch einen konischen Abstichkanal 5"" mit einem schwenkbaren Plattenschieber 7"" dargestellt. Der konische Abstichkanal 5"" weist ein innen konisches Oberteil 2"" aus Keramik auf, das die Auskleidung 4 durchdringt und am unteren Ende mit Klammem 32 an der Grundplatte 6 befestigt ist. Das konische Oberteil 2"" ist beim Abstich durch das Ausstoßen des Gusspfropfens 69 und durch die nachfolgende Stahlschmelze 57 stark belastet und muss relativ häufig ausgewechselt werden. Um den Wechsel zu erleichtern und zu beschleunigen, ist ein schwenkbarer Plattenschieber 7"" vorgesehen. Dieser weist einen rechteckigen Rahmen 70 auf, der um eine horizontale Achse 67 nach Lösen von Schrauben 71 abklappbar ist. Der Rahmen 70 ist mit Balken 72 verbunden, an denen Führungen 34 für die Schieberplatten 8, 8' befestigt sind. Diese sind von einer oberen Führungsplatte 9"" und einer unteren Führungsplatte 10"" abgedichtet. Die obere Führungsplatte 9"" ist mit einem Zwischenstück 59 des Abstichkanals 5"", die untere mit einem Unterteil 3"" des Abstichkanals 5"" einstückig verbunden. Die Führungsplatten 9"", 10"" sind aus Keramik hergestellt.

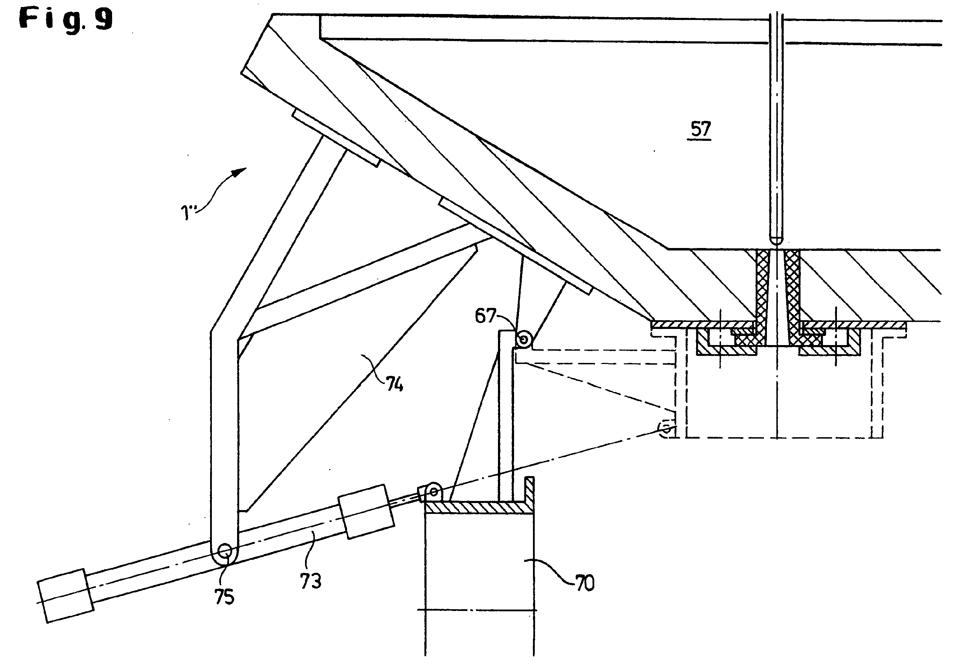

Figur 9 zeigt den Rahmen 70 in abgeklapptem (durchgezogene Linien) und in anliegendem Zustand (gestrichelte Linien). Der Rahmen 70 wird durch einen Hydraulikzylinder 73 um seine horizontale Schwenkachse 67 geschwenkt. Der Hydraulikzylinder 73 stützt sich auf einem Lager 75 eines Trägers 74 ab, der an dem Elektrolichtbogenofen 1" befestigt ist.

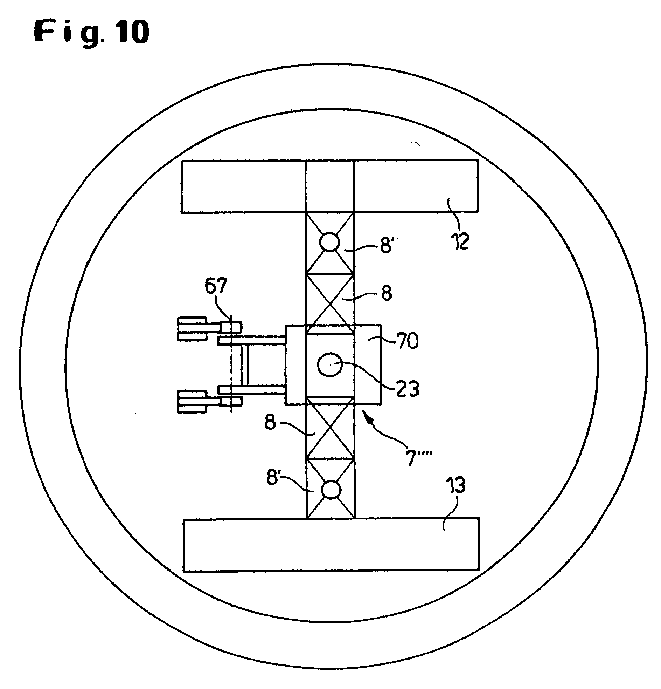

In Figur 10 ist eine schematische Draufsicht auf den schwenkbaren Rahmen 70 von Fig. 8 dargestellt, mit seiner horizontalen Schwenkachse 67 und mit der Schieberplatte 8' nebst Öffnung 23 des Plattenschiebers 7"". Das erste und zweite Rundmagazin 12, 13 und weitere Schieberplatten 8, 8' sind ebenfalls erkennbar.

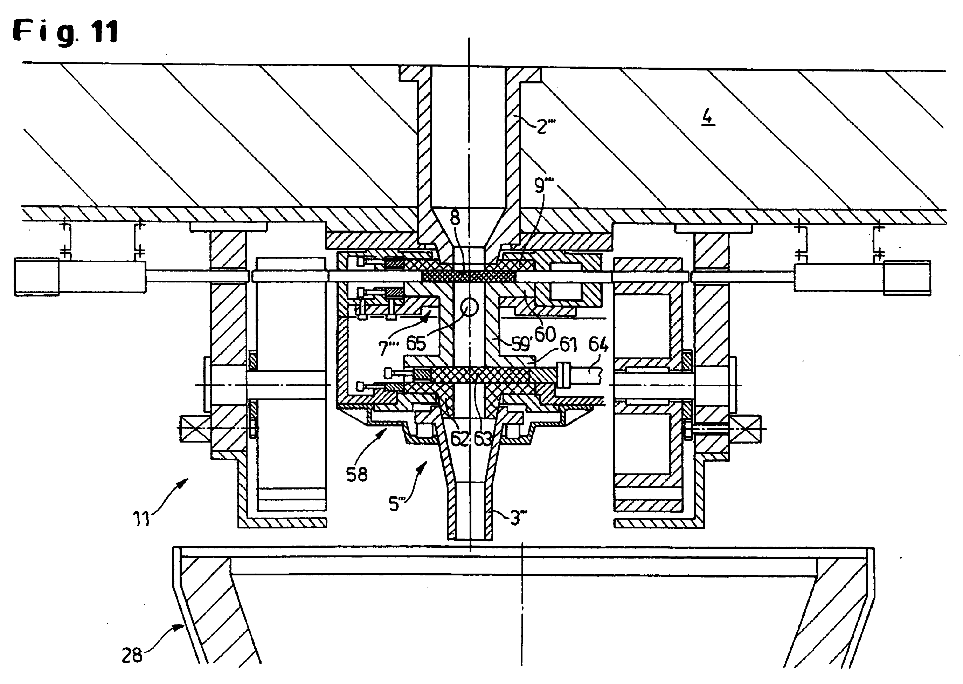

In Figur 11 ist ein Längsschnitt durch einen Abstichkanal 5"' dargestellt, mit einem Oberteil 2"', einem Unterteil 3"', einem Plattenschieber 7''' und einem zweiten Plattenschieber 58. Zwischen diesem und dem Plattenschieber 7"' ist ein Zwischenstück 59 des Abstichkanals 5''' angeordnet. Das Zwischenstück 59 weist an seinen Enden einen oberen bzw. unteren Flansch 60, 61 auf, wobei die Flansche 60, 61 zugleich als untere und obere Führungsplatten für die Plattenschieber 7''', 58 dienen. Diese besitzen außerdem eine obere Führungsplatte 9''' bzw. eine zweite untere Führungsplatte 62 sowie eine Schieberplatte 8 bzw. eine zweite Schieberplatte 63. Die Schieberplatte 8 ist mit einer Schnellwechselvorrichtung 11 entsprechend Figur 1 verbunden, die zweite Schieberplatte 63 mit einem dritten Linearantrieb 64. In dem Zwischenstück 59 befindet sich eine Füllöffnung 65, die mit einer nicht dargestellten Hochdruckquelle zur Füllmasseversorgung verbunden ist und durch die das Zwischenstück 59 in kurzer Zeit mit einer Füllmasse, vorzugsweise Sand, füllbar ist.

Der Abstichkanal 5''' der Figur 11 funktioniert folgendermaßen:

Zum Beginn des Abstichs werden beide Plattenschieber 7''', 58 geöffnet, so dass die Stahlschmelze mit dem Füllmaterial ausströmen kann.

Zum Beendigen eines Abstichs wird zuerst der Plattenschieber 7"', der aus Keramik besteht, geschlossen. Dadurch wird dessen Schieberplatte 8 der hohen thermischen Belastung durch die Stahlschmelze 57 ausgesetzt. Um diese Zeit möglichst kurz zu halten, wird sofort nach Schließen des Plattenschiebers 7"' durch die Füllöffnung 65 Sand eingeblasen, der das Zwischenstück 59 füllt. Dadurch ist die zweite Schieberplatte 63, die aus Stahl besteht, gegenüber der Schmelze 57 geschützt. Deshalb wird sofort nach Füllen des Zwischenstücks 59 mit Sand der Plattenschieber 7''' durch Weiterschieben der Schieberplatten 8 ohne Öffnung 23 durch die darauf folgende Schieberplatte 8' mit Öffnung 23 geöffnet. Dadurch ist der Plattenschieber 7"' thermisch entlastet und der zweite Plattenschieber 58 aufgrund der Sandvorlage vor der Stahlschmelze 57 geschützt. Durch den schnellen, maschinellen Wechsel werden die ungeschützten Schieberplatten 8, 8' nur kurz durch die Stahlschmelze 57 belastet und können anschließend rasch ausgetauscht werden.

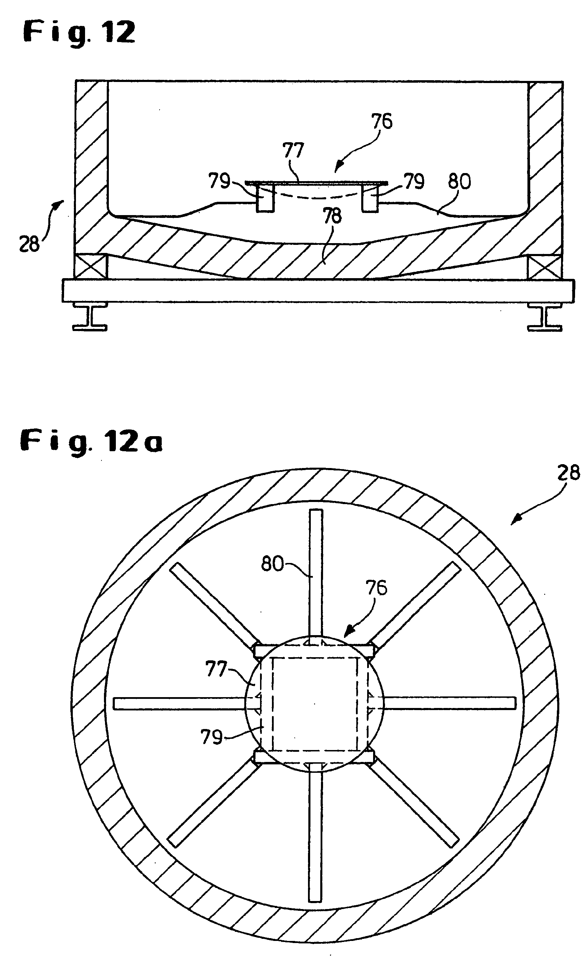

Figur 12 zeigt einen Vertikalschnitt durch eine Gießpfanne 28 mit einem Aufprallschutz 76 gegen den Aufprall des Gusspfropfens 69 beim Abstich auf den Pfannenboden 78 aus feuerfestem Material. Der Aufprallschutz 76 besteht aus einer vorzugsweise kreisrunden, dünnwandigen Stahlblechronde 77, die von vier quadratisch angeordneten dünnwandigen Hohlprofilen 79 aus Stahlblech gestützt ist. Die Hohlprofile 79 sind mit vorzugsweise acht Flachprofilen 80 verbunden, die sich auf dem Pfannenboden 78 abstützen und den Aufprallschutz 76 in der Gießpfanne 28 zentrieren.

In Figur 12a ist die Gießpfanne 28 mit dem Aufprallschutz 76 in Draufsicht dargestellt; dessen Stahlblechronde 77, Hohlprofile 79 und Flachprofile 80 sind deutlich erkennbar. Der Aufprallschutz 76 nimmt die Energie des beim Abstich herabfallenden Gusspfropfens 69 auf und schützt so den Pfannenboden 78 vor Beschädigung. Anschließend schmilzt der aus dem Material der Stahlschmelze 57 bestehende Aufprallschutz 76 in derselben ohne sie zu verunreinigen.

### Bezugszeichenliste

- 1: Elektrolichtbogenofen
- 1': Elektrolichtbogenofen
- 1": Elektrolichtbogenofen
- 2: Oberteil
- 2': Oberteil
- 2": Oberteil
- 2"': Oberteil
- 2"": Oberteil
- 3: Unterteil
- 3': Unterteil
- 3": Unterteil
- 3''': Unterteil
- 3"": Unterteil
- 4: Auskleidung
- 4': andere Auskleidung
- 5: Abstichkanal
- 5': Abstichkanal
- 5": Abstichkanal
- 5"': Abstichkanal
- 5"": Abstichkanal
- 6: Grundplatte
- 7: Plattenschieber
- 7': Plattenschieber
- 7": Plattenschieber
- 7"': Plattenschieber
- 7"": Plattenschieber
- 8: Schieberplatte ohne Öffnung
- 8': Schieberplatte mit Öffnung
- 9: obere Führungsplatte
- 9': obere Führungsplatte
- 9": obere Führungsplatte
- 9"': obere Führungsplatte
- 9"": obere Führungsplatte
- 10: untere Führungsplatte
- 10': untere Führungsplatte
- 10": untere Führungsplatte
- 10"': untere Führungsplatte
- 11: Schnellwechselvorrichtung
- 12: erstes Rundmagazin
- 13: zweites Rundmagazin
- 14: Einführung
- 15: Ausführung
- 16: erster Linearantrieb
- 17: zweiter Linearantrieb
- 18: Trommel
- 19: Lagerbolzen
- 20: Drehantrieb
- 21: Getriebe
- 22: Speicherplatz
- 23: Öffnung
- 24: Antriebsritzel
- 25: Konsole
- 26: Stößel
- 27: Abdeckung
- 28: Gießpfanne
- 29: oberes Keramikteil
- 29': oberes Keramikteil
- 30: unteres Keramikteil
- 30': unteres Keramikteil
- 31: Gehäuse
- 32: Klammer
- 33: Flanschstück
- 34: Führung
- 35: Heißseite
- 36: Kaltseite
- 37: Führung
- 38: Längswölbung
- 39: Gefäßabdeckung
- 40: Stütze
- 41: Stahlblechhülle
- 42: Bomitridbelag
- 43: Abdecktrommel
- 44: Elektrodenverstellung
- 45: Elektrode
- 47: Elektrodenantrieb
- 48: Elektrodenführung
- 49: Gegenelektrode
- 50: Stoßstange
- 51: Verlängerung
- 52: Elektrodenhalterung
- 53: Stoßstangenantrieb
- 54: Stoßstangenantriebsräder
- 55: Stoßstangenantriebsritzel
- 56: Verzahnung auf Verlängerung / Antriebszahnstange
- 57: Stahlschmelze
- 58: zweiter Plattenschieber
- 59: Zwischenstück
- 59': anderes Zwischenstück
- 60: oberer Flansch
- 61: unterer Flansch
- 62: zweite untere Führungsplatte
- 63: zweite Schieberplatte
- 64: dritter Linearantrieb
- 65: Füllöffnung
- 66: metallurgisches Gefäß
- 67: horizontale Schwenkachse
- 68: Stahlblecheinsatz
- 69: Gusspfropfen
- 70: Rahmen
- 71: Schraube
- 72: Balken
- 73: Hydraulikzylinder
- 74: Träger
- 75: Lager
- 76: Aufprallschutz
- 77: Stahlblechronde
- 78: Pfannenboden
- 79: Hohlprofil
- 80: Flachprofil

## Patentansprüche

1. Metallurgisches Gefäß, insbesondere ein nicht kippbarer Elektrolichtbogenofen (1) zum Schmelzen von Stahl, mit einem Abstichkanal (5, 5', 5", 5"'), der von Schieberplatten (8, 8') mit und ohne Öffnung (23) beherrscht ist, die zwischen einer oberen und einer unteren Führungsplatte (9, 9', 9", 9"', 10, 10', 10", 10"') eines Plattenschiebers (7, 7', 7", 7''') geführt sind, wobei zumindest die Schieberplatten aus Keramik bestehen, **dadurch gekennzeichnet, dass** die in intensivem Kontakt zur Schmelze (57) stehenden Schieberplatten (8, 8') mit Hilfe einer Schnellwechselvorrichtung (11) maschinell auswechselbar sind.

2. Elektrolichtbogenofen nach Anspruch 1, **dadurch gekennzeichnet, dass** eine erste und eine zweite Schieberplatte (8, 8') vorgesehen sind, wobei die zweite Schieberplatte (8') die Öffnung (23) aufweist, deren Durchmesser zumindest den des Abstichkanals (5, 5', 5", 5"') im Bereich der Schieberplatten (8, 8') entspricht.

3. Elektrolichtbogenofen nach Anspruch 2, **dadurch gekennzeichnet, dass** dem Plattenschieber (7, 7', 7", 7"') eine Einführung (14) für die Schieberplatten (8, 8') und dieser ein erstes Plattenmagazin, vorzugsweise ein erstes Rundmagazin (12) mit unverschlissenen Schieberplatten (8, 8') vorgeschaltet sind und das dem Plattenschieber (7, 7', 7", 7''') eine Ausführung (15) für die Schieberplatten (8, 8') und dieser ein zweites Plattenmagazin vorzugsweise ein zweites Rundmagazin (13) für verschlissene Schieberplatten (8, 8') nachgeschaltet sind.

4. Elektrolichtbogenofen nach Anspruch 3, **dadurch gekennzeichnet, dass** die Rundmagazine (12, 13) eine horizontale Achse und vorzugsweise 24 parallel zu dieser und tangential zum Umfang der Rundmagazine (12, 13) angeordnete Speicherplätze für die Schieberplatten (8, 8') aufweisen.

5. Elektrolichtbogenofen nach Anspruch 4 **dadurch gekennzeichnet, dass** die Schieberplatten (8, 8'), die sich zwischen den Führungsplatten (9, 9', 9", 9''', 10, 10', 10", 10"') und in der Ein- und Ausführung (14, 15) sowie in den Rundmagazinen (12, 13) befinden, fluchtend angeordnet sind.

6. Elektrolichtbogenofen nach Anspruch 5, **dadurch gekennzeichnet, dass** auf den Abstichkanal fernen Seiten der Rundmagazine (12, 13) Linearantriebe (16, 17) vorgesehen sind, die mit den Schieberplatten (8, 8') fluchten und zum Axialspiel freien Verschieben der Schieberplatten (8, 8') zwischen den Rundmagazinen (12, 13) dienen.

7. Elektrolichtbogenofen nach Anspruch 6, **dadurch gekennzeichnet, dass** die Druckkräfte der Linearantriebe (16, 17) entgegengerichtet sind und dass die Druckkraft des in Transportrichtung wirkenden Linearantriebs größer als die des gegenüberliegenden ist.

8. Elektrolichtbogenofen nach Anspruch 7, **dadurch gekennzeichnet, dass** die Linearantriebe (16, 17) elektrisch, hydraulisch oder pneumatisch ausgebildet sein können.

9. Elektrolichtbogenofen nach Anspruch 8, **dadurch gekennzeichnet, dass** vorzugsweise jedes der Rundmagazine (12, 13) einen Drehantrieb (20,20') aufweist und dass die Drehantriebe (20, 20') synchron laufen.

10. Elektrolichtbogenofen nach Anspruch 9, **dadurch gekennzeichnet, dass** ein Abstichkanal (5") in Fließrichtung der Schmelze auf ganzer Länge konisch erweitert ist.

11. Elektrolichtbogenofen nach Anspruch 10, **dadurch gekennzeichnet, dass** ein Oberteil (2, 2', 2", 2"') des Abstichkanals (5, 5', 5", 5"'), das sich oberhalb der Schieberplatten (8, 8') befindet, aus Keramik besteht und einen erneuerbaren Bornitrid- oder Grafitbelag aufweist.

12. Elektrolichtbogenofen nach Anspruch 11, **dadurch gekennzeichnet, dass** in der Achsrichtung des weiteren Abstichkanals (5") eine Stoßstange (50) angeordnet ist, die von ihrer Parkposition in der Gefäßabdeckung (39) des Elektrolichtbogenofens (1) aus in den Abstichkanal (5") bewegbar ist.

13. Elektrolichtbogenofen nach Anspruch 12, **dadurch gekennzeichnet, dass** die Schieberplatten (8, 8') aus einem Keramikwerkstoff hoher Wärmeleitfähigkeit, vorzugsweise Aluminiumnitrid oder Siliciumcarbid bestehen.

14. Elektrolichtbogenofen nach Anspruch 13, **dadurch gekennzeichnet, dass** die Schieberplatten (8, 8') einen Bonitrid- oder Grafitbelag aufweisen.

15. Elektrolichtbogenofen nach Anspruch 14, **dadurch gekennzeichnet, dass** die Schieberplatten (8, 8') im kalten Zustand eine nach unten durchhängende Längswölbung (38) aufweisen.

16. Elektrolichtbogenofen nach Anspruch 15, **dadurch gekennzeichnet, dass** die Schieberplatten (8, 8') durch die Linearantriebe (16, 17) in Längsschwingungen versetzbar sind, die vorzugsweise eine Frequenz von 1Hz und eine Amplitude von 1,5 bis 3 mm aufweisen.

17. Elektrolichtbogen nach Anspruch 16, **dadurch gekennzeichnet, dass** ein Plattenschieber (7"") um eine horizontale Achse (67) nach unten wegklappbar ausgebildet ist.

18. Elektrolichtbogenofen nach Anspruch 17, **dadurch gekennzeichnet, dass** unterhalb eines Plattenschiebers (7''') mit den Schieberplatten (8, 8') ein zweiter Plattenschieber (58) mit einer zweiten Schieberplatte (63) mit Abstand angeordnet ist, und das ein Zwischenstück (59) eines Abstichkanals (5''') zwischen den Schieberplatten (8, 8', 63) mit fließfähigem Füllmaterial, vorzugsweise Sand, füllbar ist, der die zweite Schieberplatte (63) nach dem Öffnen des Plattenschiebers (7''') vor einem Kontakt mit der Stahlschmelze (57) schützt.

19. Elektrolichtbogenofen nach Anspruch 18, **dadurch gekennzeichnet, dass** auf dem Boden einer Gießpfanne (28) ein verlorener Stahlblecheinsatz (68) angeordnet ist, der beim Abstich den oberhalb des Plattenschiebers (7") befindlichen Gusspfropfen (69) auffängt und der in der nachfolgenden Stahlschmelze (57) einschmilzt.
